# EUROPEAN PATENT APPLICATION

(11) **EP 4 163 139 A1**
(43) Date of publication of application: **12.04.2023**
(21) Application number: 21822985.4
(22) Date of filing: 04.06.2021
(51) Int. Cl.: B60K 7/00, F16C 19/18, F16C 35/067, F16C 41/00, H02K 5/173, H02K 7/14, B60K 6/26, B60K 6/44, B60K 6/52, B60K 6/547

(54) **VEHICLE POWER DEVICE AND VEHICLE BEARING WITH POWER GENERATOR**

(30) Priority: 08.06.2020 JP 2020099184
(71) Applicant: NTN Corporation, Osaka-shi, Osaka 550-0003 (JP)
(72) Inventor: YADA, Yuuji, Iwata-shi, Shizuoka 438-8510 (JP); NISHIKAWA, Kentaro, Iwata-shi, Shizuoka 438-8510 (JP)
(74) Representative: Maikowski & Ninnemann Patentanwälte Partnerschaft mbB
(86) International application number: PCT/JP2021/021403
(87) International publication number: WO 2021/251300

(57) **Abstract**

Provided is a vehicle power device (1) including: a wheel bearing (2); and a driving motor (3) that can rotationally drive an outer ring (4) as a rotary ring. The vehicle power device further includes a bracket (24) attached to a knuckle (8) of a vehicle. The bracket (24) includes a bracket base portion (24a) and a bracket cylindrical portion (24b), the bracket base portion interposed between the knuckle (8) and an inner ring (5) wherein the inner ring (5) is removably fixed, the bracket cylindrical portion (24b) extending from the bracket base portion (24a) toward an outboard side. The driving motor (3) includes a stator (18) removably attached to an inner periphery of the bracket cylindrical portion (24b) and a rotor (19) attached to the outer ring (4) on an inner periphery of the stator (18).

## Description

### CROSS REFERENCE TO THE RELATED APPLICATION

This application is based on and claims Convention priority to Japanese patent application No. 2020-099184, filed June 8, 2020, the entire disclosure of which is herein incorporated by reference as a part of this application.

### BACKGROUND OF THE INVENTION

### (Field of the Invention)

The present invention relates to a vehicle power device and a vehicle bearing assembly with a power generator. The present invention also relates to a technology applied to a vehicle or the like.

### (Description of Related Art)

A vehicle power device having a motor incorporated inside a wheel is a device integrally including a wheel bearing for supporting the wheel and a motor for driving and power regeneration of the wheel and provides many advantages such as drive assistance for a vehicle, power regeneration during deceleration, and attitude stabilization through torque control of each wheel, and the demand for such vehicle power devices is expected to increase in the future in connection with electric motorization of vehicles.

### <Conventional Structure 1>

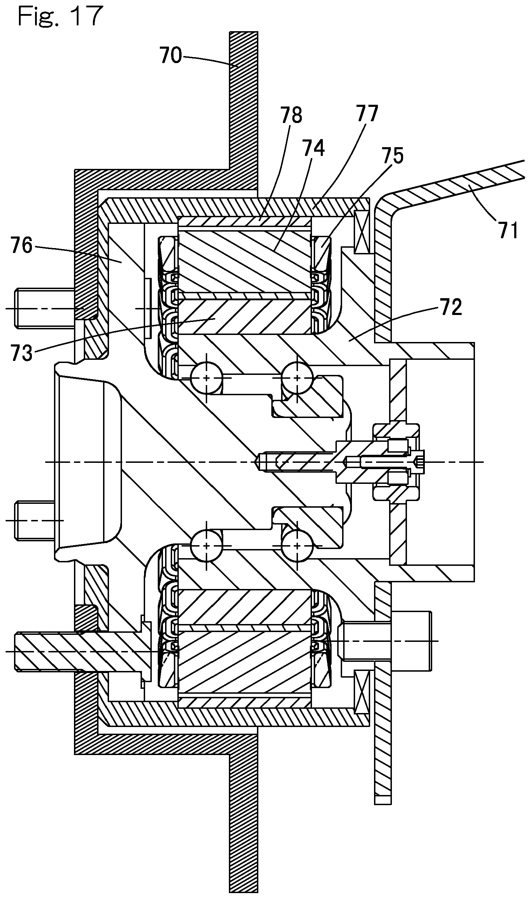

Fig. 17 is a sectional view of a conventional vehicle power device which includes a driving motor having a power generation function. As shown in Fig. 17, such a vehicle power device which includes a conventional driving motor having a power generation function is accommodated in an inner periphery side with respect to a sliding portion of a brake rotor 70 (Patent Document 1). A motor stator core 74 is fixed to a suspension device 71 via a wheel bearing outer ring 72 and a motor stator fixing member 73. Motor winding coils 75 are wound on the motor stator core 74 to flow current and thereby generate a magnetic force. Meanwhile, a motor rotor casing 77 and a motor rotor 78 are attached to a wheel bearing flange 76, and the motor rotor 78 rotates around the motor stator core 74. The vehicle power device drives and regeneratively brakes the wheel by the driving motor having the power generation function integrated into the wheel bearing in accordance with a running condition of the vehicle.

In the conventional vehicle power device above, when the wheel bearing or the driving motor having the power generation has abnormality or is deteriorated, they cannot be separated. Therefore, the conventional vehicle power device requires replacement of the entire vehicle power device including the motor. Further, replacement work is difficult to perform, and the costs of replacement components increase.

### <Conventional Structure 2>

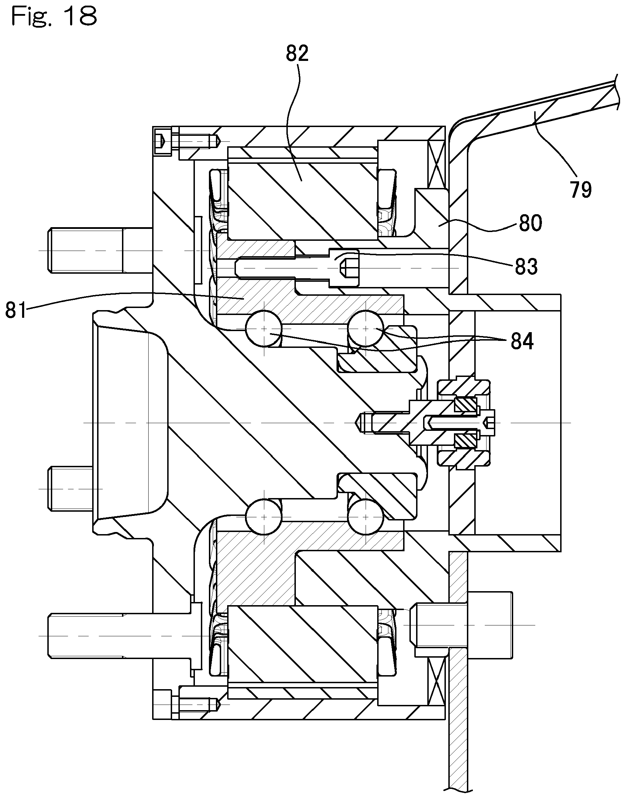

In order to solve the problem of the conventional structure 1, as shown in Fig. 18, it is proposed to make separable a wheel bearing part and a driving motor part having a power generation (Patent Document 2). In the example of Fig. 18, a wheel bearing fixing member 80 is provided with a knuckle 79 which is a chassis frame component, and one or both of an outer ring 81 and a stator 82 are removably fixed to the wheel bearing fixing member 80.

### [Related Document]

### [Patent Document]

[Patent Document 1] JP Laid-open Patent Application No. 2018-52482
[Patent Document 2] JP Laid-open Patent Application No. 2019-202570

### SUMMARY OF THE INVENTION

In the conventional structure 2, a wheel bearing, a motor rotor and a motor stator can be separated without disassembling the wheel bearing. However, in this construction, the motor stator 82 is in contact with an outer diametric part of the wheel bearing fixing member 80. Therefore, that generates heat because of feeding the electric current to a coil during motor operation (copper loss) and change in magnetic flux inside a stator core associated with rotating (iron loss). Since the generated heat is conducted to the wheel bearing fixing member 80 and an outer ring 81, temperature of an inside space of a bearing rises. That makes deteriorate early grease inside the bearing, a cage that holds rolling elements 84, a magnetic encoder and so forth, resulting in less reliability than before.

Moreover, a fastening portion between the outer ring 81 and the wheel bearing fixing member 80 is located on an outer diametric part of a rolling surface, and fixing them with a bolt 83 is appropriate so as to ensure easiness of replacement. However, the bolt needs to be strong enough to withstand loads from the road surface, so that the fastening portion between the outer ring 81 and the wheel bearing fixing member 80 is thick toward an outer diametric side. Accordingly, the space which is occupied by a motor part and located on the outer diametric side of the fastening portion becomes small, and as a result, desired output cannot be obtained. To obtain desired output, a thinner coil or larger current is required. Thus, the heat generated by the motor stator 82 becomes higher.

An object of the present invention is to provide a vehicle power device and a vehicle bearing with a power generator, and the vehicle power device is capable of reducing time and costs for replacement by making it possible to replace only the wheel bearing and the like when replacing them and securing reliability of a bearing by improving heat dissipation of a stator.

A vehicle power device according to the present invention includes:
a wheel bearing including an inner ring as a fixed ring and an outer ring as a rotary ring rotatably supported by the inner ring through rolling elements, the outer ring including a wheel mounting flange configured to be attached with a wheel of a vehicle on an outboard side end portion; and
an electric motor that can rotationally drive the rotary ring, and
the vehicle power device further includes:
   a bracket attached to a chassis frame component of the vehicle, the bracket including a bracket base portion and a bracket cylindrical portion, the bracket base portion interposed between the chassis frame component and the inner ring wherein the inner ring is removably fixed, the bracket cylindrical portion extending from the bracket base portion toward an outboard side,
   wherein the electric motor includes a stator removably attached to an inner periphery of the bracket cylindrical portion and a rotor attached to the outer ring on an inner periphery of the stator.

According to this constitution, the wheel bearing includes the fixed ring as the inner ring and the rotary ring as the outer ring which is the outer ring rotation. In addition, the inner ring is removably fixed to the bracket base portion of the bracket. Moreover, the stator is removably fixed to the inner periphery of the bracket cylindrical portion in a cylindrical manner extending from the bracket base portion to the outboard side. Thus, it is possible to easily remove an assembled body of the wheel bearing, etc., from the vehicle power device by detaching the inner ring from the bracket base portion attached to the chassis frame component when replacing the wheel bearing. Then, a new wheel bearing can be assembled into an assembled body, etc., in a reverse manner to the replacement described above. Further, since the stator of the electric motor is fixed to the inner periphery of the bracket cylindrical portion, it is possible to ensure a larger space in a radial direction of the electric motor than the conventional structure above or the like in which a fastening portion is provided between a wheel bearing outer ring and a wheel bearing fixing member. Thus, it is possible to obtain a desired output of the electric motor. When the electric motor is replaced, it is possible to remove the stator from the inner periphery of the bracket cylindrical portion just by removing the wheel bearing from the vehicle power device without disassembling bearing components or the like.

The electric motor is of an inner rotor motor type in which the stator is attached to the inner periphery of the bracket cylindrical portion and the rotor is attached to the outer ring on the inner periphery of the stator. Therefore, heat generated in the stator is transmitted to the chassis frame component via the stator, the bracket cylindrical portion and the bracket base portion. Since the stator is not in contact with the wheel bearing, it is difficult to transmit heat generated in the stator to the inside of the wheel bearing. Thus, it is possible to efficiently radiate heat generated in the electric motor to the chassis frame component of the vehicle. This makes it possible to prevent grease or the like inside the bearing from being deteriorated early. Therefore, since only the wheel bearing and the like can be replaced when replacing them, it is possible to reduce time and costs for replacement and secure reliability of the bearing by improving heat dissipation of the stator.

The wheel bearing may be removable from the bracket base portion in a bearing axial direction in a state where the bracket is attached to the chassis frame component and the stator is disposed on the bracket cylindrical portion. In this case, the assembled body of the wheel bearing, etc., can be removed from the vehicle power device in the bearing axial direction without the procedure of removing the entire vehicle power device from the chassis frame component once when replacing the wheel bearing. This can promote reduction of workload.

The inner ring may include an inner ring main body and a partial inner ring fitted to an outer peripheral surface of the inner ring main body on an inboard side; the inner ring main body may include an inboard side protrusion that protrudes toward an inboard side and has a male thread portion formed at a tip end part of the inboard side protrusion; the bracket base portion may be formed with a through-hole through which the inboard side protrusion can be inserted; and a nut may be screwed into the male thread portion of the inboard side protrusion in a state where the inboard side protrusion is inserted into the through-hole of the bracket base portion and an inboard side end surface of the partial inner ring is abutted to an outboard side surface of the bracket base portion. In this case, it is possible to easily detach the assembled body of the wheel bearing from the bracket base portion in the axial direction by detaching the nut from the male thread portion of the inboard side protrusion. Further, a new wheel bearing can be assembled into an assembled body, etc., in a reverse manner to the replacement described above.

The inner ring may include the inner ring main body and the partial inner ring fixed to the outer peripheral surface of the inner ring main body on an outboard side by fastening or staking with a nut; the inner ring main body may include the inboard side protrusion that protrudes toward the inboard side and has the male thread portion formed at the tip end part of the inboard side protrusion; the bracket base portion may be formed with the through-hole through which the inboard side protrusion can be inserted; and the nut may be screwed into the male thread portion of the inboard side protrusion in a state where the inboard side protrusion is inserted into the through-hole of the bracket base portion and an inboard side end surface of the inner ring main body is abutted to the outboard side surface of the bracket base portion.

In this case, it is possible to easily detach the assembled body of the wheel bearing from the bracket base portion in the axial direction by detaching the nut on the inboard side from the male thread portion of the inboard side protrusion. Since the partial inner ring can obtain a bearing preload by being fixed to the outer peripheral surface of the inner ring main body on the outboard side by fastening or staking with the nut, a means for providing a bearing preload and a fixing means for the inner ring with respect to the bracket base portion can be disposed separately. This makes it easy to adjust a bearing preload and improves reliability of the bearing.

The inner ring may include the inner ring main body and the partial inner ring fixed to the outer peripheral surface of the inner ring main body on the outboard side by fastening or staking with a nut; the inner ring may include a flange part in which a screw hole is formed on an inboard side end of the inner ring main body; and the flange part may be removably fixed to the bracket base portion with a bolt from an inboard side.

In this case, it is possible to easily detach the assembled body of the wheel bearing from the bracket base portion in the axial direction by detaching the bolt from the flange part of the inner ring main body. Since the partial inner ring can obtain a bearing preload by being fixed to the outer peripheral surface of the inner ring main body on the outboard side by fastening or staking with the nut, a means for providing a bearing preload and a fixing means for the inner ring with respect to the bracket base portion can be disposed separately. This makes it easy to adjust a bearing preload and improves reliability of the bearing.

A spline that prevents relative rotation with respect to the bracket base portion may be disposed on the inboard side protrusion inserted into the through-hole of the bracket base portion. The spline may suppress rotation of the inner ring as the fixed ring and vibration with respect to a rotation direction. This further improves reliability of the bearing.

The wheel bearing may include a rotation detecting sensor configured to detect the rotation speed of the outer ring with respect to the inner ring; the rotation detecting sensor may include a rotation detecting sensor rotor disposed on an outboard side end portion of the outer ring and a rotation detecting sensor stator disposed on an outboard side end portion of the inner ring that detects the rotation detecting sensor rotor; and an external extraction member that leads out an output cable of the rotation detecting sensor to the outside may be provided. In this case, rotation of the electric motor can be controlled by detecting the rotation speed of the outer ring with respect to the inner ring. Moreover, since both the rotation detecting sensor rotor and the rotation detecting sensor stator are disposed on outboard side end portions of each wheel, it is possible to perform maintenance such as gap adjustment of the rotation detecting sensor or the like without removing the wheel bearing from the vehicle power device.

The rotation detecting sensor may also serve as a wheel speed sensor. In this case, it is possible to reduce the number of components and thereby to simplify the structure.

A cylindrical member made of a non-magnetic material may be disposed between an inner peripheral surface of the rotor and an outer peripheral surface of the outer ring. In this case, it is possible to prevent magnetism generated from the rotor from adversely affecting the wheel bearing.

A heat radiation means that radiates heat generated in the electric motor to external space may be disposed on an outer periphery of the bracket cylindrical portion. When the outer periphery of the bracket cylindrical portion that is in contact with the stator is exposed to the open air, it is highly effective in radiating heat generated in the electric motor to the open air. In this case, if the heat radiation means is disposed on the outer periphery of the bracket cylindrical portion, greater heat radiation effect can be expected.

A vehicle bearing with a power generator according to the present invention includes:
a wheel bearing including an inner ring as a fixed ring and an outer ring as a rotary ring rotatably supported by the inner ring through rolling elements, the outer ring including a wheel mounting flange configured to be attached with a wheel of a vehicle on an outboard side end portion; and
a generator that generates electricity by rotation of the rotary ring, and
the vehicle bearing with the power generator further includes:
   a bracket attached to a chassis frame component of the vehicle, the bracket including a bracket base portion and a bracket cylindrical portion, the bracket base portion interposed between the chassis frame component and the inner ring wherein the inner ring is removably fixed, the bracket cylindrical portion extending from the bracket base portion toward an outboard side,
   wherein the generator includes a stator removably attached to an inner periphery of the bracket cylindrical portion and a rotor attached to the outer ring on an inner periphery of the stator.

According to this constitution, it is possible to easily remove an assembled body of the wheel bearing, etc., from the vehicle bearing with the power generator by detaching the inner ring from the bracket base portion attached to the chassis frame component when replacing the wheel bearing. Then, a new wheel bearing can be assembled into an assembled body, etc., in a reverse manner to the replacement described above. Further, since the stator of the electric motor is fixed to the inner periphery of the bracket cylindrical portion, it is possible to ensure a larger space in the radial direction of the generator than the conventional structure above or the like in which a fastening portion is provided between a wheel bearing outer ring and the wheel bearing fixing member. Thus, it is possible to obtain a desired output of the generator. When the generator is replaced, it is possible to remove the stator from the inner periphery of the bracket cylindrical portion just by removing the wheel bearing from the vehicle bearing with the power generator without disassembling bearing components or the like.

The generator is of an inner rotor motor type in which the stator is attached to the inner periphery of the bracket cylindrical portion and the rotor is attached to the outer ring on the inner periphery of the stator. Therefore, heat generated in the stator is transmitted to the chassis frame component via the stator, the bracket cylindrical portion and the bracket base portion. Since the stator is not in contact with the wheel bearing, it is difficult to transmit heat generated in the stator to the inside of the wheel bearing. Thus, it is possible to efficiently radiate heat generated in the generator to the chassis frame component of the vehicle. This makes it possible to prevent grease or the like inside the bearing from being deteriorated early. Therefore, since only the wheel bearing and the like can be replaced when replacing them, it is possible to reduce time and costs for replacement and secure reliability of a bearing by improving heat dissipation of the stator.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a sectional view of a vehicle power device according to a first embodiment of the present invention;
Fig. 2 is a side view of the vehicle power device;
Fig. 3 is a sectional view along line III-III of Fig. 1;
Fig. 4 is an exploded sectional view of the vehicle power device;
Fig. 5 is a sectional view of a vehicle power device according to another embodiment of the present invention;
Fig. 6 is a sectional view of a vehicle power device according to yet another embodiment of the present invention;
Fig. 7 is a perspective view of the vehicle power device of Fig. 6;
Fig. 8 is a perspective view of a vehicle power device according to yet another embodiment of the present invention;
Fig. 9 is a sectional view of a vehicle power device according to yet another embodiment of the present invention;
Fig. 10 is a side view of the vehicle power device;
Fig. 11 is a sectional view of a vehicle power device according to yet another embodiment of the present invention;
Fig. 12 is a sectional view of a vehicle power device according to yet another embodiment of the present invention;
Fig. 13 is a side view of the vehicle power device;
Fig. 14 is a block diagram illustrating a conceptual feature of a vehicle system for a vehicle including any of the vehicle power devices;
Fig. 15 is a power system diagram as an example of a vehicle including the vehicle system;
Fig. 16 illustrates conceptual features of a vehicle system for another vehicle including the vehicle power device;
Fig. 17 is a sectional view of a conventional vehicle power device; and
Fig. 18 is a sectional view of another conventional vehicle power device.

### DESCRIPTION OF THE EMBODIMENTS

### [First Embodiment]

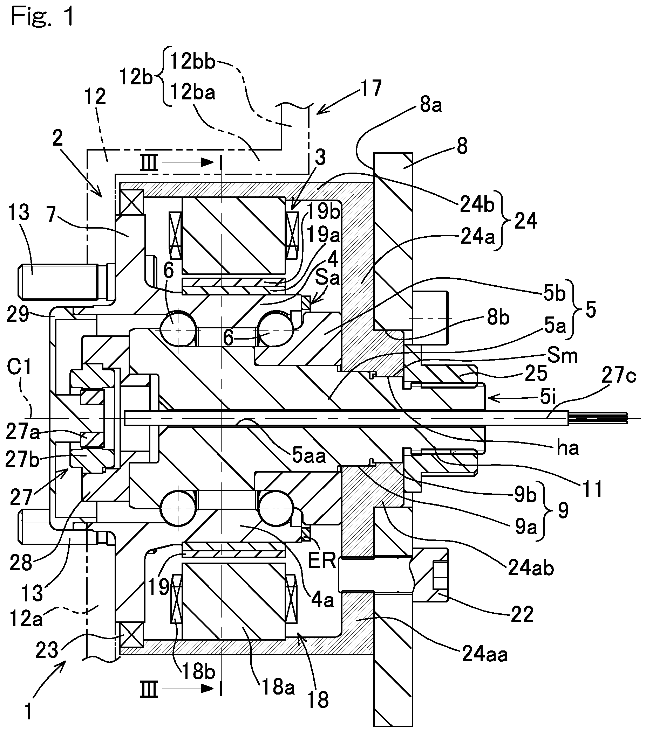

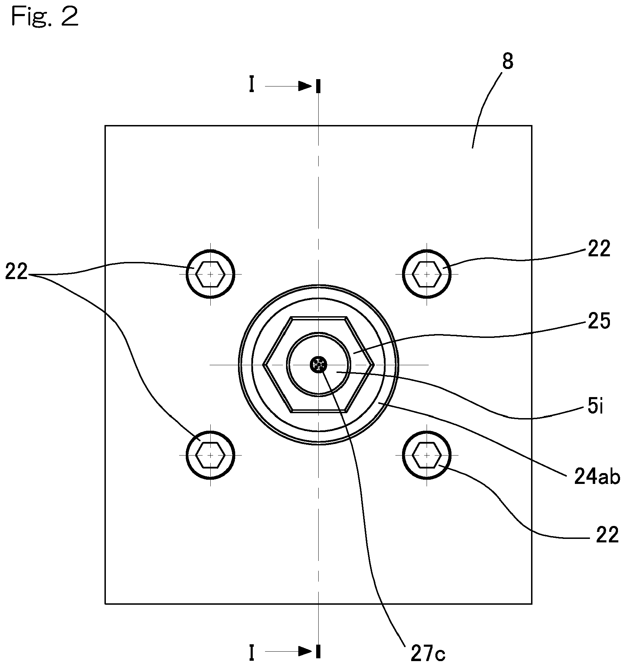

A vehicle power device according to an embodiment of the present invention will be described with reference to Fig. 1 to Fig. 4. Fig 1 is a sectional view along line I-I of Fig. 2. As shown in Fig. 1, the vehicle power device 1 includes a wheel bearing 2, a bracket 24 and a driving motor 3 having a power generation function that is an electric motor also serving as a generator. The driving motor 3 having a power generation function of the vehicle power device 1 is an inner rotor type.

### <Wheel Bearing 2>

The wheel bearing 2 includes: an outer ring 4 serving as a rotary ring; double rows of rolling elements 6; a non-illustrated cage holding rolling elements 6; and an inner ring 5 serving as a fixed ring. The wheel bearing 2 is an angular ball bearing to which a steel ball is applied as rolling elements 6. Grease is filled into a bearing space between the outer ring 4 and the inner ring 5. The term "bearing axial direction" refers to a direction along a rotation axis C 1 of the wheel bearing 2, and the term "bearing radial direction" refers to a direction perpendicular to the rotation axis C1.

The outer ring 4 includes an outer ring main body 4a formed with double rows of raceway surfaces and a wheel mounting flange 7 that extends from an outer peripheral surface of the outer ring main body 4a on an outboard side toward an outer diameter side. A plurality of hub bolts 13 are inserted into the wheel mounting flange 7. A brake rotor 12 and a wheel of a non-illustrated wheel are attached by hub bolts 13 in an overlapping manner in the axial direction. A non-illustrated tire is attached to an outer periphery of the wheel.

Instead of the hub bolts 13, a screw hole may be formed on a flange surface of the outer ring 4, and the outer ring 4, the brake rotor 12, the wheel and the tire may be fixed by wheel bolts (not illustrated) from the outside. In the present specification, the term "outboard side" refers to a side closer to an outside of a vehicle in a widthwise direction of the vehicle in a state where the vehicle power device 1 is mounted in the vehicle, and the term "inboard side" refers to a side closer to a center of the vehicle in the widthwise direction of the vehicle.

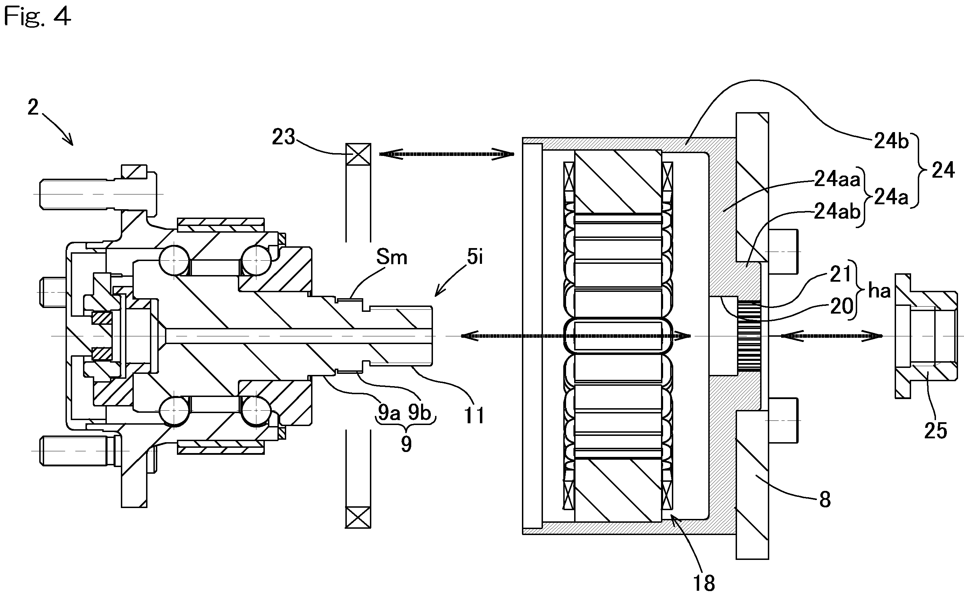

The inner ring 5 includes an inner ring main body 5a and a partial inner ring 5b fitted to an outer peripheral surface of the inner ring main body 5a on the inboard side. The inner ring main body 5a includes an inboard side protrusion 5i that protrudes toward the inboard side. The inboard side protrusion 5i is disposed coaxially and integrally with the inner ring main body 5a and protrudes toward the inboard side with respect to an arrangement position of the partial inner ring 5b. The expression "disposed integrally" means that the inboard side protrusion 5i and the inner ring main body 5a are formed as parts or the whole of a single object by, for example, forging, machining, or the like from a single material, instead of being constituted by multiple elements joined together. The inboard side protrusion 5i includes a fitting part 9 and a male thread portion 11 sequentially from the outboard side to the inboard side. The fitting part 9 is a fitting part of the bracket 24 described later and is connected to the outer peripheral surface of the inner ring main body 5a on the inboard side via a step. The fitting part 9 has the first fitting part 9a formed in a slightly smaller diameter than that of the outer peripheral surface on the inboard side and the second fitting part 9b located on the outboard side of the first fitting part 9a. A spline Sm fitted to a part of a bracket base portion 24a of the bracket 24 (a to-be-fitted part 21 described later (Fig. 4)) is formed on the second fitting part 9b. The spline Sm is made of a plurality of spline teeth formed at predetermined intervals in a circumferential direction and may preferably be an involute spline from the viewpoint of vibration suppression. An outer peripheral surface of the second fitting part 9b, i.e., an outer diameter surface of the spline Sm, is formed in a smaller diameter than that of the first fitting part 9a and larger than that of the male thread portion 11.

### <Bracket 24>

The bracket 24 includes the bracket base portion 24a fixed to a knuckle 8 which is a chassis frame component of a vehicle and a bracket cylindrical portion 24b extending from an outer diameter side end of the large-diameter section in the bracket base portion 24a (described later) toward the outboard side. The bracket base portion 24a and the bracket cylindrical portion 24b are formed coaxially and integrally. The bracket base portion 24a and the bracket cylindrical portion 24b may be formed of separate components. The bracket base portion 24a is interposed between the knuckle 8 and the inner ring 5, and the inner ring 5 is removably fixed. The bracket base portion 24a includes a large-diameter section 24aa on the outboard side and a small-diameter section 24ab connected to an inboard side surface of the large-diameter section 24aa and having a smaller diameter than that of the large-diameter section 24aa.

As shown in Fig. 4, a to-be fitted part 20 fitted to the first fitting part 9a is formed in the large-diameter section 24aa, and a to-be fitted part 21 made of a spline groove fitted to the Spline Sm which is an involute spline is formed in the small-diameter section 24ab. The first fitting part 9a and the to-be fitted part 20 may be fitted through clearance fitting or may be press-fitted so as to further improve an axial precision.

As shown in Figs. 1 and 2, the knuckle 8 is formed with a through-hole 8b through which the small-diameter section 24ab can be fitted. A plurality of threaded holes in a circumferential direction are formed in the large-diameter section 24aa, and the bracket base portion 24a is attached to the knuckle 8 by a plurality of bolts 22 screwed into these threaded holes. The bracket base portion 24a is fixed to the knuckle 8 in a state where an outer peripheral surface of the small-diameter section 24ab is fitted to the through-hole 8b of the knuckle 8 and the inboard side surface of the large-diameter section 24aa is abutted to an outboard side surface 8a of the knuckle 8.

The inboard side surface of the partial inner ring 5b is contactably and separably formed on an outboard side surface of the large-diameter section 24aa. The bracket base portion 24a is formed with a through-hole ha through which the inboard side protrusion 5i can be inserted. The through-hole ha is formed by the to-be fitted parts 20 and 21 (Fig. 4). In addition, the first fitting part 9a of the inboard side protrusion 5i is fitted to the to-be fitted part 20 (Fig. 4) of the large-diameter section 24aa, and the second fitting part 9b of the inboard side protrusion 5i is spline-fitted to the to-be fitted part 21 (Fig. 4) of the small-diameter section 24ab. Moreover, a nut 25 is screwed into the male thread portion 11, so that the wheel bearing 2 is fixed to the bracket 24 at a torque value that generates a predetermined axial force in a bearing part. The second fitting part 9b of the inner ring main body 5a and the to-be fitted part 21 (Fig. 4) of the bracket 24 are spline-fitted together, so that it may be possible to suppress rotation of the inner ring 5 and vibration with respect to a rotation direction.

### <Brake 17>

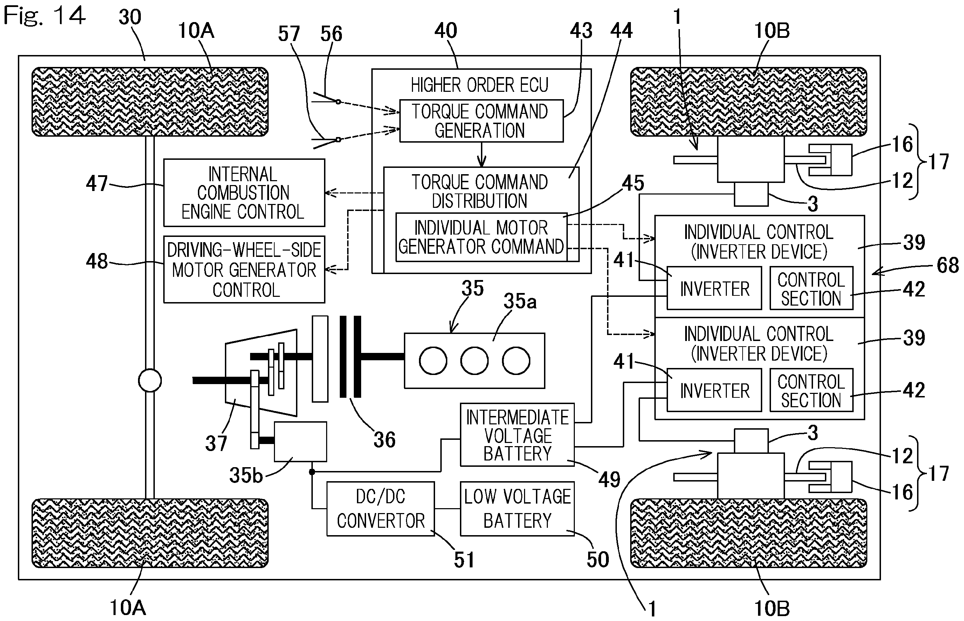

A brake 17 is a friction brake including a disc-type brake rotor 12 and a brake caliper 16 (Fig. 14). The brake rotor 12 includes a flat plate-like part 12a and an outer peripheral part 12b. The flat plate-like part 12a is an annular member shaped like a flat plate that overlaps with the wheel mounting flange 7. The outer peripheral part 12b includes: a cylindrical portion 12ba extending from an outer peripheral edge portion of the flat plate-like part 12a toward the inboard side in a cylindrical manner; and a flat plate portion 12bb extending from an inboard-side end of the cylindrical portion 12ba toward an outer diametric side in a flat plate-like manner. The brake caliper 16 (Fig. 14) may be of a hydraulic or mechanical type. Alternatively, the brake caliper 16 may be of an electric motor-driven type.

### <Drive Motor 3 Having a Power Generation Function>

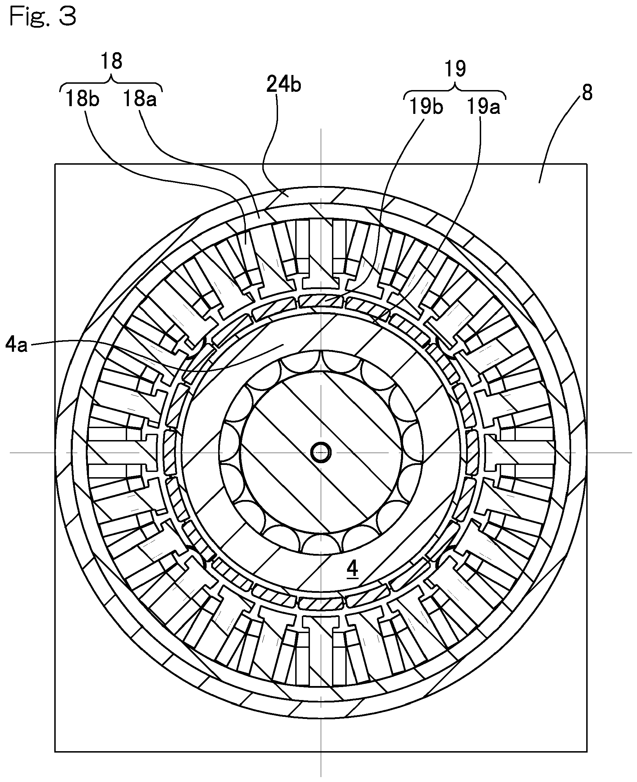

As shown in Fig. 1 and Fig. 3, a drive motor 3 having a power generation function of this example is a drive motor having a power generation function for travel assistance which can generate power by rotation of a wheel and can be fed to rotatably drive the wheel. The drive motor 3 having the power generation function is of an inner rotor motor type which includes a stator 18 removably attached to an inner periphery of the bracket cylindrical portion 24b and a rotor 19 attached to an outer periphery of the outer ring main body 4a on an inner periphery of the stator 18. In addition, the drive motor 3 having the power generation function is of a direct drive type in which the rotor 19 is attached to the outer ring 4.

The drive motor 3 having the power generation function is disposed radially inward with respect to an inner diameter of the brake rotor 12 and within an axial range between the wheel mounting flange 7 and the outboard side surface 8a of the knuckle 8. For example, the drive motor 3 having the power generation function may be a surface permanent magnet motor, i.e., an SPM (surface permanent magnet) synchronous motor (or also abbreviated as an SPMSM (surface permanent magnet synchronous motor)).

Alternatively, the drive motor 3 having the power generation function may be an IPM (interior permanent magnet) synchronous motor (or also abbreviated as an IPMSM (interior permanent magnet synchronous motor)). Besides, the drive motor 3 having the power generation function may be of any type, such as a switched reluctance motor (abbreviated as SR motor) and an induction motor (abbreviated as IM). In any of the motor types, the stator 18 may have any winding form, such as a distributed coil or a concentrated coil.

### <Stator 18>

The stator 18 includes a stator core 18a having an annular shape and stator coils 18b wound around a tooth portion of the stator core 18a with a non-illustrated insulating material. The insulating material may be a resin bobbin or the like. The stator core 18a is made of, e.g., an electromagnetic steel sheet, a powder magnetic core, and an amorphous alloy or the like. The stator core 18a is fitted to an inner peripheral surface of the bracket cylindrical portion 24b of the bracket 24. The stator core 18a is fixed to the inner peripheral surface of the bracket cylindrical portion 24b by press fitting, bonding, constraining by separate components, or the like. Although not illustrated, a plurality of recessed or protruded portions may be formed on an outer peripheral surface of the stator core 18a at equal intervals in a circumferential direction, and a plurality of protruded or recessed portions fitting in a plurality of the recessed or protruded portions above may be formed on the inner peripheral surface of the bracket cylindrical portion 24b. This makes it possible to prevent the stator core 18 from moving with respect to a rotation direction.

### <Rotor 19>

The rotor 19 is disposed radially inward opposite to the stator core 18a. The rotor 19 includes a rotor core 19a of a cylindrical shape that is fixed to the outer periphery of the outer ring main body 4a and a permanent magnet 19b fixed to an outer periphery of the rotor core 19a. The rotor core 19a is made of, e.g., a soft magnetic material and is concentric with the outer ring main body 4a. The rotor core 19a is also fixed to the outer ring main body 4a by, e.g., press fitting, welding, bonding, or the like. A plurality of recessed portions are formed on an inner peripheral surface of the rotor core 19a at equal intervals in the circumferential direction, and the permanent magnet 19b is fitted in the respective recessed portions and is bonded or the like so as to be fixed.

### <Sealing Structure>

As shown in Fig. 1, a sealing member 23 for preventing entry of water and/or external objects into the inside of the drive motor 3 having the power generation function and the wheel bearing 2 is disposed between the outboard side of the inner peripheral surface of the bracket cylindrical portion 24b and an outer peripheral surface of the wheel mounting flange 7.

### <Rotation Detecting Sensor 27>

The vehicle power device 1 includes a rotation detecting sensor 27. The rotation detecting sensor 27 is configured to detect a rotation angle or a rotation speed of the outer ring 4 with respect to the inner ring 5 in order to control rotation of the drive motor 3 having the power generation function. The rotation speed is the number of rotation per unit time. The rotation detecting sensor 27 includes a rotation detecting sensor rotor 27a, a rotation detecting sensor stator 27b that detects the rotation detecting sensor rotor 27a, and an output cable 27c connected to the rotation detecting sensor stator 27b.

The rotation detecting sensor stator 27b is fixed to an outboard side end portion of the inner ring main body 5a through a sensor fixing member 28. The rotation detecting sensor rotor 27a is fixed to an outboard side end portion of the outer ring 4 through a cap 29 having a bottomed cylindrical shape. The rotation detecting sensor rotor 27a is fixed to an outer peripheral surface of a shaft part that protrudes in a bearing axial direction from a bottom part of the cap 29 by fitting or the like. The cap 29 is waterproof and prevents entry of water into the rotation detecting sensor 27 and the wheel bearing part. A through-hole 5aa as an external extraction member that leads out an output cable 27c to the outside (the inboard side with respect to the knuckle 8 in the example) is formed in the inside of the inner ring main body 5a. The through-hole 5aa is formed along the axis of the inner ring main body 5a and penetrates from an outboard side end to an inboard side end of the inner ring main body 5a. The rotation detecting sensor 27 may be, for example, a resolver. It should be noted that the rotation detecting sensor 27 is not limited to a resolver and may be any of, for example, an encoder, a pulser ring, and a hall sensor, irrespective of the types.

### <Wheel Speed Sensor Sa>

A wheel speed sensor Sa is a sensor that detects a rotation speed of a wheel and includes, for example, a magnetic encoder ring ER disposed on an inboard side end of the outer ring 4 and a sensor part (not illustrated) disposed on an outer peripheral surface of the partial inner ring 5b with a predetermined gap between the magnetic encoder ring ER and the sensor part. In this example, the wheel speed sensor Sa and the rotation detecting sensor 27 are disposed independently, but the rotation detecting sensor 27 may also serve as a wheel speed sensor.

### <Procedure of Separating a Bearing of Present Embodiment>

A procedure of replacing the wheel bearing 2 will be described with reference to Fig. 4.
· The nut 25 is removed from the male thread portion 11 of the inboard side protrusion 5i.
· The wheel bearing 2 and the sealing member 23 are removed from the bracket 24 in a bearing axial direction.

The assembly operation is performed in a reverse manner to the replacement described above.

### <Effects and Advantages>

According to the above-described vehicle power device 1, the wheel bearing 2 includes the inner ring 5 as a fixed ring and an outer ring rotation of the outer ring 4 as a rotary ring. In addition, the inner ring 5 is removably fixed to the bracket base portion 24a of the bracket 24. Moreover, the stator 18 is removably fixed to the inner periphery of the bracket cylindrical portion 24b in a cylindrical manner extending from the bracket base portion 24a to the outboard side. Thus, it is possible to easily remove the assembled body of the wheel bearing 2, etc., from the vehicle power device 1 by detaching the inner ring 5 from the bracket base portion 24a attached to the knuckle 8 when replacing the wheel bearing 2. Then, a new wheel bearing 2 can be assembled into an assembled body, etc., in a reverse manner to the replacement described above. Further, since the stator 18 of the drive motor 3 having the power generation function is fixed to the inner periphery of the bracket cylindrical portion 24b, it is possible to ensure a larger space in a radial direction of the drive motor 3 having the power generation function than the conventional structure above or the like in which the fastening portion is provided between a wheel bearing outer ring and a wheel bearing fixing member. Thus, it is possible to obtain a desired output of the electric motor. When the drive motor 3 having the power generation function is replaced, it is possible to remove the stator 18 from the inner periphery of the bracket cylindrical portion 24b just by removing the wheel bearing 2 from the vehicle power device 1 without disassembling bearing components or the like.

The drive motor 3 having the power generation function is of an inner rotor motor type in which a stator 18 is attached to the inner periphery of the bracket cylindrical portion 24b and a rotor 19 is attached to the outer ring 4 on the inner periphery of the stator 18. Therefore, heat generated in the stator 18 is transmitted to the knuckle 8 via the stator 18, the bracket cylindrical portion 24b and the bracket base portion 24a. Since the stator 18 is not in contact with the wheel bearing 2, it is difficult to transmit heat generated in the stator 18 to the inside of the wheel bearing 2. Thus, it is possible to efficiently radiate heat generated in the drive motor 3 having the power generation function to the knuckle 8 of the vehicle. Since the outer periphery of the bracket cylindrical portion 24b that is in contact with the stator 18 is exposed to the open air, it is highly effective in radiating heat generated in the drive motor 3 having the power generation function to the open air. These make it possible to prevent grease or the like inside the bearing from being deteriorated early. Therefore, since only the wheel bearing 2 and the like can be replaced when replacing them, it is possible to reduce time and costs for replacement and secure reliability of a bearing by improving heat dissipation of the stator 18.

The wheel bearing 2 is removable from the bracket base portion 24a in a bearing axial direction in a state where the bracket 24 is attached to the knuckle 8 and the stator 18 is disposed on the bracket cylindrical portion 24b. Thus, the assembled body of the wheel bearing 2, etc., can be removed from the vehicle power device 1 in the bearing axial direction without the procedure of removing the entire vehicle power device from the knuckle 8 once when replacing the wheel bearing 2. This can promote reduction of workload.

### <Other Embodiments>

Next, other embodiments will be described. In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

### [Variant of First Embodiment: Non-Magnetic Material]

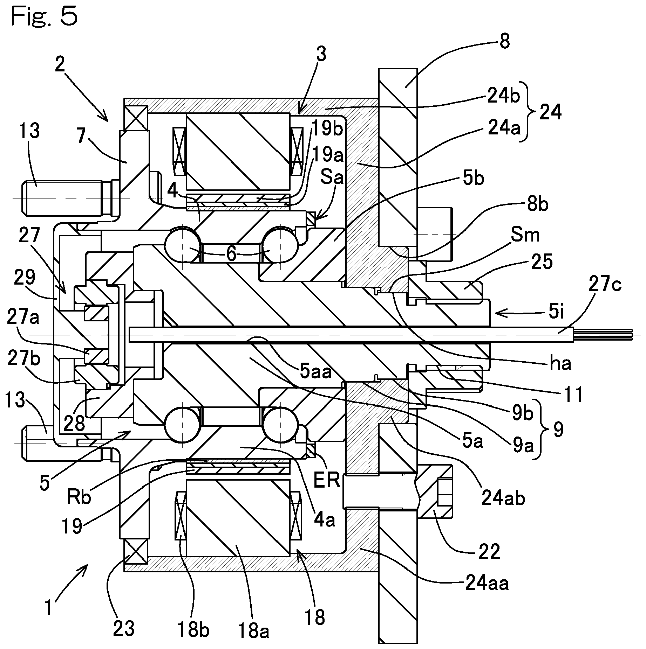

As shown in Fig. 5, a cylindrical member Rb made of a non-magnetic material may be disposed between an inner peripheral surface of the rotor 19 and the outer peripheral surface of the outer ring main body 4a. In this case, it is possible to prevent magnetism generated from the rotor 19 from adversely affecting the wheel bearing 2.

### [Variant of First Embodiment: Cooling Groove]

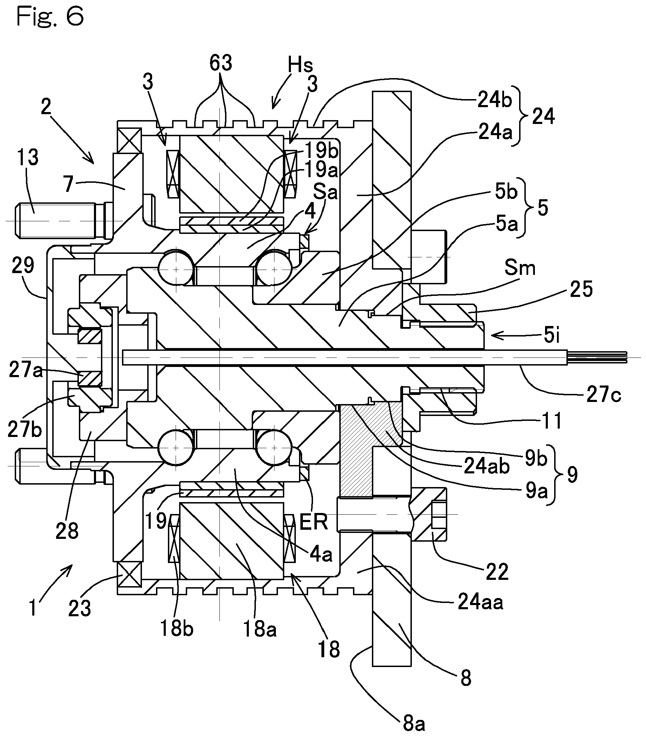

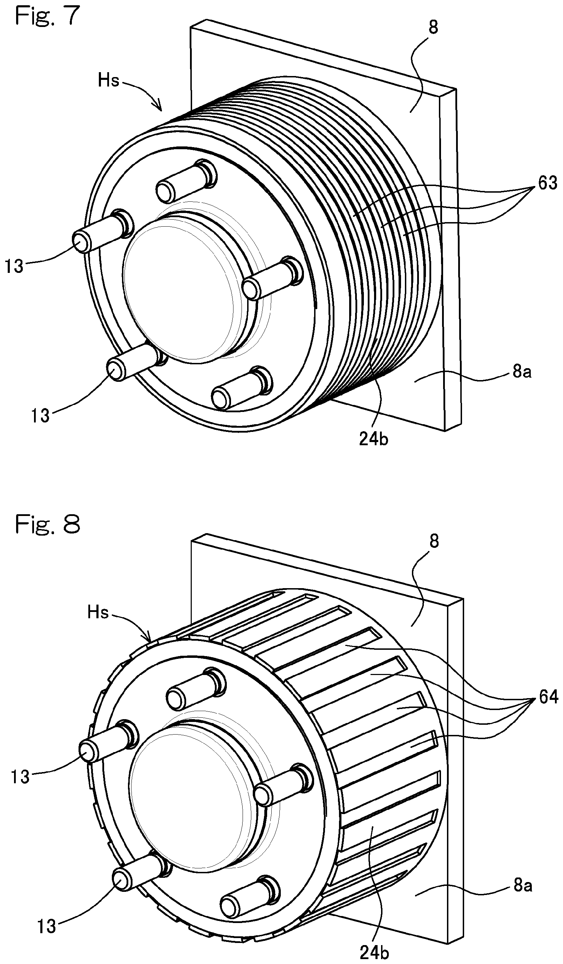

As shown in Fig. 6 and 7, a heat radiation means Hs that radiates heat generated in the drive motor 3 having the power generation function to external space may be disposed on the outer periphery of the bracket cylindrical portion 24b. The heat radiation means Hs in this example includes a plurality of annular grooves (cooling grooves) 63 formed on an outer peripheral surface of the bracket cylindrical portion 24b. The annular grooves 63, for example, are formed at predetermined intervals in an axial direction. In each annular groove 63, the section of the bracket cylindrical portion 24b along a plane including the bearing axial direction is formed as a rectangular groove shape, but is not limited to a rectangular groove shape. Since the outer periphery of the bracket cylindrical portion 24b that is in contact with the stator 18 is exposed to the open air, it is highly effective in radiating heat generated in the drive motor 3 having the power generation function to the open air. In this case, if the heat radiation means Hs is disposed on the outer periphery of the bracket cylindrical portion 24b, greater heat radiation effect can be expected.

### [Variant of First Embodiment: Other Cooling Groove]

As shown in Fig. 8, the heat radiation means Hs may include a plurality of recessed portions (cooling grooves) 64 formed on the outer peripheral surface of the bracket cylindrical portion 24b. The plurality of recessed portions 64 are formed on the outer peripheral surface of the bracket cylindrical portion 24b at equal intervals in a circumferential direction. Each recessed portion 64 extends over a predetermined distance in a bearing axial direction from the outboard side toward the inboard side on the outer peripheral surface of the bracket cylindrical portion 24b. In each recessed portion 64, the section of the bracket cylindrical portion 24b along a plane perpendicular to the bearing axial direction is formed as a rectangular groove shape, but is not limited to a rectangular groove shape. Also in this case, the same effects and advantages as well as the heat radiation means Hs (Fig. 6) can be obtained. The heat radiation means HS is not limited to the examples of Fig. 6 to 8, and can be changed to various shapes as long as it does not interfere with the brake rotor 12 (Fig. 1).

### [Second Embodiment]

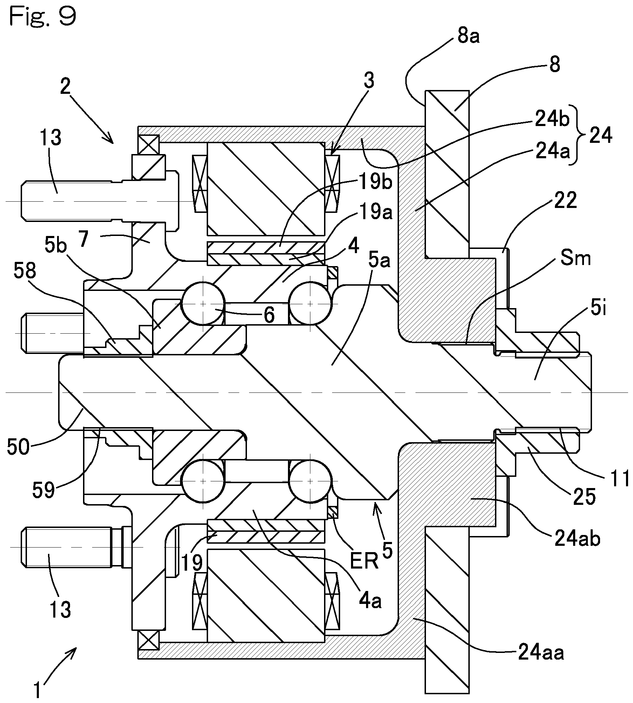

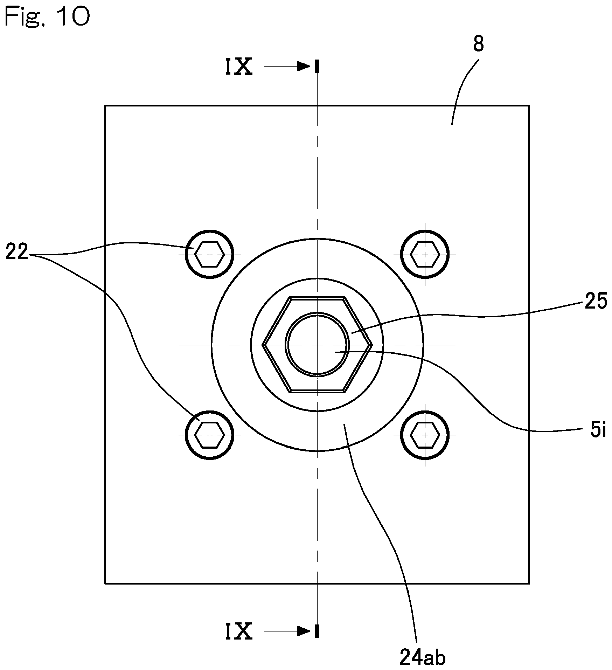

Fig. 9 is a sectional view along line IX-IX of Fig. 10. As shown in Fig. 9 and 10, in the vehicle power device 1 according to the second embodiment of the present invention, the inner ring 5 includes the inner ring main body 5a and the partial inner ring 5b fixed to the outer peripheral surface of the inner ring main body 5a on the outboard side by fastening with the nut 58. The inner ring main body 5a of this example includes the inboard side protrusion 5i that protrudes toward the inboard side and an outboard side protrusion 5o that protrudes toward an outboard side. The male thread portion 59 is formed at a tip end part of the outboard side protrusion 5o, and the nut 58 is screwed into the male thread portion 59, so that the partial inner ring 5b is fixed to the inner ring main body 5a, and a bearing preload is obtained. The nut 25 is screwed into the male thread portion 11 of the inboard side protrusion 5i in a state where the inboard side protrusion 5i is inserted into the through-hole of the bracket base portion 24a and an inboard side end surface of the inner ring main body 5a is abutted to an outboard side surface of the bracket base portion 24a.

According to this constitution, it is possible to easily detach the assembled body of the wheel bearing 2 from the bracket base portion 24a in an axial direction by detaching the nut 25 on the inboard side from the male thread portion 11 of the inboard side protrusion 5i. Since the partial inner ring 5b can obtain a bearing preload by being fixed to the outer peripheral surface of the inner ring main body 5a on the outboard side by fastening with the nut 58, a means for providing a bearing preload and a fixing means for the inner ring 5 with respect to the bracket base portion 24a can be disposed separately. This makes it easy to adjust a bearing preload and improves reliability of the bearing.

### [Variant of Second Embodiment: Inner Ring Staking Type]

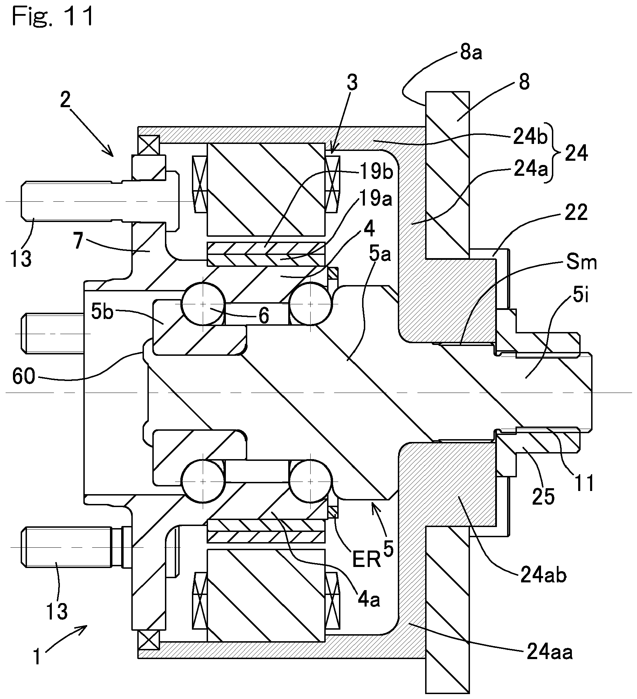

As shown in Fig. 11, the partial inner ring 5b may be fixed to the outer peripheral surface of the inner ring main body 5a on the outboard side by staking with a staking portion 60. In this case, it is possible to reduce the number of components than that of Fig. 9 and 10 and thereby to shorten the axial length of the inner ring main body 5a.

### [Third Embodiment]

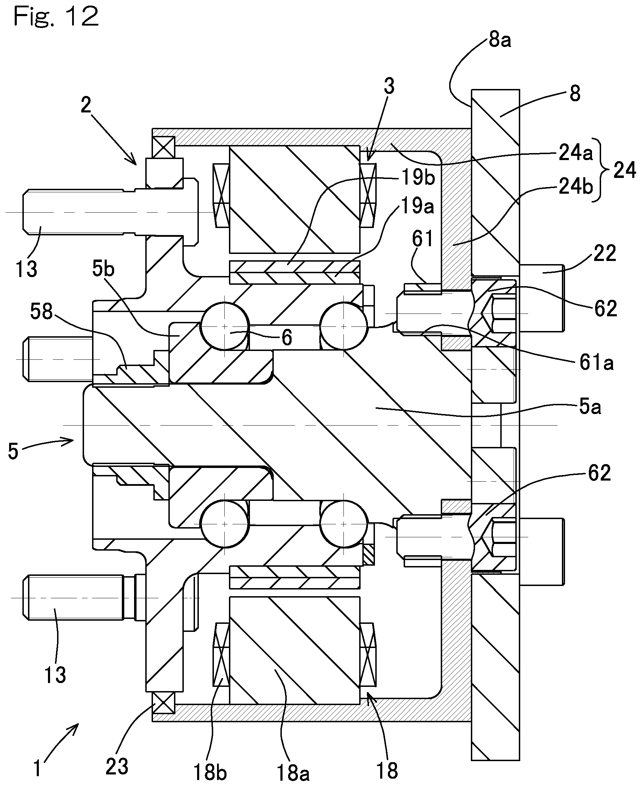

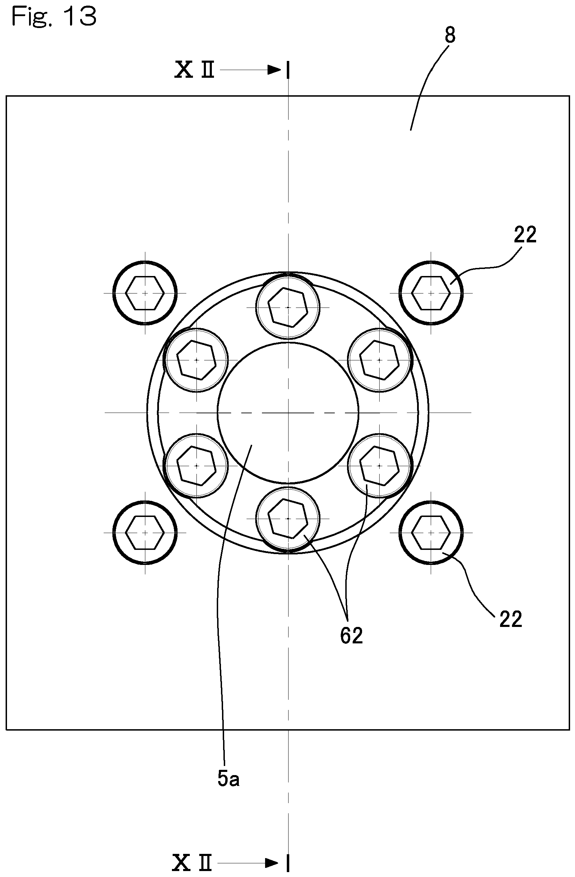

Fig. 12 is a sectional view along line XII- XII of Fig. 13. As shown in Figs. 12 and 13, the inner ring 5 of this example includes the inner ring main body 5a and the partial inner ring 5b fixed to the outer peripheral surface of the inner ring main body 5a on the outboard side by fastening with the nut 58. The inner ring 5 includes a flange part 61 in which a screw hole 61a is formed on the inboard side end of the inner ring main body 5a, and the flange part 61 is removably fixed to the bracket base portion 24a with a bolt 62 from the inboard side. Although not illustrated, the partial inner ring 5b may be fixed to the outer peripheral surface of the inner ring main body 5a on the outboard side by staking with a staking portion 60 (See Fig. 11).

According to this constitution, it is possible to easily detach the assembled body of the wheel bearing 2 from the bracket base portion 24a in an axial direction by detaching the bolt 62 from the flange part 61 of the inner ring main body 5a. Since the partial inner ring 5b can obtain a bearing preload by being fixed to the outer peripheral surface of the inner ring main body 5a on the outboard side by fastening or staking with the nut 58, a means for providing a bearing preload and a fixing means for the inner ring 5 with respect to the bracket base portion 24a can be disposed separately. This makes it easy to adjust a bearing preload and improves reliability of the bearing.

### <Vehicular System>

Fig. 14 is a block diagram illustrating conceptual features of a vehicular system including the vehicle power device 1 according to any of the embodiments.

In this vehicular system, the vehicle power device 1 is installed in a driven wheel 10_{B} of a vehicle including the driven wheel 10_{B} mechanically unconnected to a main drive source. The wheel bearing 2 (Fig. 1, etc.) of the vehicle power device 1 is a bearing for supporting the driven wheel 10_{B}.

The main drive source 35 may be an internal combustion engine such as a gasoline engine or a diesel engine, or a motor generator (electric motor), or a hybrid type drive source in which an internal combustion engine and a motor generator are combined. The term "motor generator" refers to an electric motor capable of generating power when rotation is applied. In the illustrated example, the vehicle 30 is a front-wheel drive vehicle including driving wheels 10_{A} as front wheels and driven wheels 10_{B} as rear wheels, and is a hybrid vehicle (hereinafter, sometimes referred to as "HEV") including main drive sources 35 having an internal combustion engine 35a and a driving-wheel-side motor generator 35b.

Specifically, the vehicle is of a mild hybrid type in which the driving-wheel-side motor generator 35b is driven at an intermediate voltage of, e.g., 48V. Hybrid vehicles are generally categorized into strong hybrids and mild hybrids: the mild hybrids refer to hybrid vehicles that have an internal combustion engine as a main drive source and use a motor mainly to assist travelling when they start moving and/or accelerate, and they are distinguished from the strong hybrids in that the mild hybrids can normally travel in an EV (electric vehicle) mode only for a while, but not for a long time. The internal combustion engine 35a in the illustrated example is connected to a drive shaft of the driving wheels 10_{A} via a clutch 36 and a speed reduction gear or speed reducer 37, and the driving-wheel-side motor generator 35b is connected to the speed reduction gear 37.

The vehicular system includes: motor generators 3 that are generators for travel assisting that rotationally drive the driven wheels 10_{B}; individual control units 39 that control the motor generators 3; and an individual motor generator command unit 45 that is provided in a higher order ECU 40 and outputs a command for causing the individual control units 39 to control driving and power regeneration. The motor generators 3 are connected to a power storage unit. The power storage unit may be, e.g., a battery (rechargeable battery), a capacitor, a condenser or the like. Although the power storage unit may be of any type and be positioned anywhere in the vehicle 30, in this embodiment, it corresponds to an intermediate voltage battery 49, among a low voltage battery 50 and the intermediate voltage battery 49 installed in the vehicle 30.

The motor generators 3 for the driven wheels are direct drive motors in which no speed reduction gear is used. The motor generators 3 operate as motor generators when supplied with power and also serve as generators for converting kinetic energy of the vehicle 30 into electric power. Since each motor generator 3 has the rotor 19 (Fig. 1) attached to the outer ring 4 (Fig. 1), the outer ring 4 (Fig. 1) is rotationally driven when current is applied to the electric motor 3, whereas regenerative power is generated when an induction voltage is applied during power regeneration. The motor generators 3 have a drive voltage for rotationally driving or a regenerative voltage of 100 V or lower.

### <Control System of Vehicle 30>

The higher order ECU 40 is a unit for performing integrated control of the vehicle 30 and includes a torque command generation unit 43. The torque command generation unit 43 generates a torque command in accordance with a signal of an operation amount inputted from each of an accelerator operation unit 56 (such as an accelerator pedal) and a brake operation unit 57 (such as a brake pedal). The vehicle 30 includes an internal combustion engine 35a and a driving-wheel-side motor generator 35b as main drive sources 35 as well as two motor generators 3, 3 for driving the two respective driven wheels 10_{B}, 10_{B}. Accordingly, the higher order ECU 40 is provided with a torque command distribution unit 44 for distributing the torque command(s) to the respective drive sources 35a, 35b, 3, 3 in accordance with a predetermined rule.

A torque command to the internal combustion engine 35a is transmitted to an internal combustion engine control unit 47 and is used, e.g., to control a valve opening degree by the internal combustion engine control unit 47. A torque command to the driving-wheel-side motor generator 35b is transmitted to and executed on a driving-wheel-side motor generator control unit 48. Torque commands to the electric motors 3, 3 on the driven wheel side are transmitted to the individual control units 39, 39. The individual motor generator command unit 45 refers to a section of the torque command distribution unit 44 which performs output to the individual control units 39, 39. The individual motor generator command unit 45 also has a function of providing each individual control unit 39 with a torque command that is a command, for braking, of a braking force to be produced by each motor generator 3 through regenerative braking in response to a signal of an operation amount from the brake operation unit 57. The individual motor generator command unit 45 and the individual control units 39 constitute a control unit 68 for controlling the motor generators 3.

Each of the individual control units 39 is an inverter device and includes: an inverter 41 for converting direct current voltage from the intermediate voltage battery 49 into a three-phrase alternating current voltage; and a control section 42 for controlling an output of the inverter 41 in accordance with e.g., the torque command by e.g., PWM control. The inverter 41 includes: a bridge circuit (not illustrated) by use of e.g., a semi-conductor switching element; and a charge circuit (not illustrated) for charging the intermediate voltage battery 49 with regenerative power from the motor generators 3. It should be noted that although each of the individual control units 39 is separately provided to each of the two motor generators 3, 3, the two individual control units 39, 39 may be disposed in a single enclosure and share a control section 42 in common.

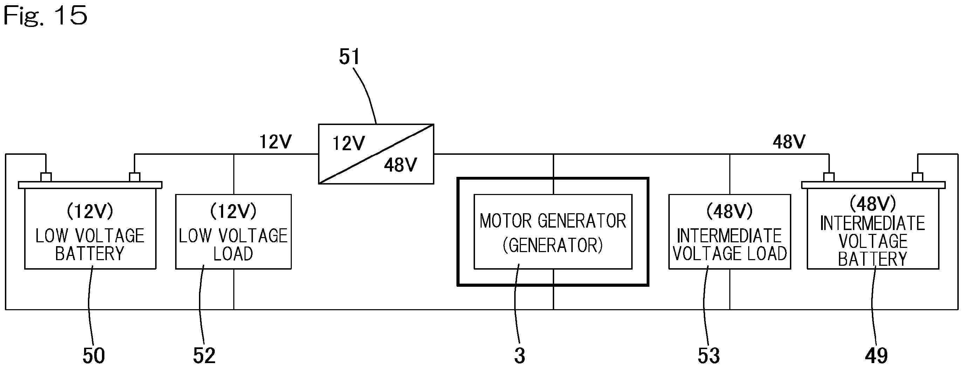

Fig. 15 is a power system diagram of an exemplary vehicle equipped with the vehicular system (Fig. 14). In the example of Fig. 15, there are a low voltage battery 50 and an intermediate voltage battery 49 as batteries, and the batteries 49, 50 are connected through a DC/DC convertor 51. Actually, two motor generators 3 are equipped, but only one of them is illustrated as a representative. Although the driving-wheel-side motor generator 35b in Fig. 14 is not illustrated in Fig. 15, it is connected to an intermediate voltage system in parallel with the motor generators 3 on the driven wheel side. A low voltage load 52 is connected to a low voltage system, and an intermediate voltage load 53 is connected to the intermediate voltage system. Actually, a plurality of the low voltage loads 52 and a plurality of the intermediate voltage loads 53 are equipped, but only one for each load is illustrated as a representative.

The low voltage battery 50 is a battery that is commonly used as a power source for e.g., a control system in various automobiles, and may be, for example, of 12 V or 24 V The low voltage load 52 may include a starter motor of the internal combustion engine 35a, lights, and key components, such as the higher order ECU 40 and other ECU (not illustrated). The low voltage battery 50 may be called as an auxiliary battery for electric accessories, and the intermediate voltage battery 49 may be called as an auxiliary battery for an electric system.

The intermediate voltage battery 49 has a voltage higher than that of the low voltage battery 50 but lower than that of a high voltage battery (100 V or higher, for example, about 200 to 400 V) used for e.g., strong hybrid vehicles, the voltage having a negligible influence to a human body when an electric shock occurs during operation. The intermediate voltage battery may preferably be a 48-V battery that are used in mild hybrids in recent years. The intermediate voltage battery 49, such as a 48-V battery, can be relatively easily installed in a vehicle equipped with a conventional internal combustion engine, and can be used as a mild hybrid so as to reduce fuel consumption by power assistance and/or regeneration by electric power.

The intermediate voltage loads 53 in the 48-V system are the accessory components, for example, including the power-assist motors that are the motor generator 35b on the driving wheel side, an electric pump, an electric power steering, a supercharger, and an air compressor. Since the loads constituted by the accessories are set up as the 48-V system, the system can reduce the possibility of an electric shock to an occupant or a maintenance operator, although the system can provide a reduced output for power assistance as compared with that of a high voltage system (such as a strong hybrid vehicle with a voltage of 100 V or higher). The system also allows an insulation coating for wiring to be thin, so that the weight and/or volume of the wiring can be reduced. In addition, the system can input/output a larger electric power with a smaller amount of current than a 12-V system, so that the volume of the electric motor or the generator can be reduced. Thus, the system contributes to the effect of reducing fuel consumption of the vehicle.

This vehicular system is suitable for accessory components of such a mild hybrid vehicle and is applied as a power-assisting and power-regenerative component. It should be noted that although, conventionally, a mild-hybrid vehicle sometimes includes a CMG (crankshaft motor-driven generator), a GMG (gearbox motor-driven generator), or a belt-drive starter motor (none of them are illustrated), all of these are affected by efficiency of a transmission device and a speed reduction gear because they perform power assistance or power regeneration for an internal combustion engine or a power device.

In contrast, since the vehicular system of this embodiment is mounted in the driven wheel 10_{B}, the vehicular system is unconnected to the main drive sources such as the internal combustion engine 35a and the electric motors (not illustrated) and can directly use kinetic energy of the vehicle body in power regeneration. In cases where a CMG, or a GMG, or a belt-drive starter motor is provided, its incorporation has to be taken into consideration from a designing phase of the vehicle 30, and thus it is difficult to retrofit these components.

In contrast, the motor generators 3 of this vehicular system, which can be accommodated inside the driven wheels 10_{B}, can be attached even to a finished vehicle in a number of steps equivalent to that for replacing a component, making it possible to set up a 48-V system even to the finished vehicle including only an internal combustion engine 35a. An existing vehicle including only an internal combustion engine 35a can be converted into a mild hybrid vehicle by installing a vehicle power device 1 according to any of the above embodiments and the intermediate voltage battery 49 having a drive voltage or a regenerative voltage of 100 V or lower as a battery for the motor generator, without significant modifications of the vehicle. A vehicle including the vehicular system according to the present embodiment may also include another supplementary or auxiliary drive motor generator 35b as in the example of Fig. 14. In that case, it is possible to increase drive assistance and power regeneration in the vehicle 30, so that fuel consumption can further be reduced.

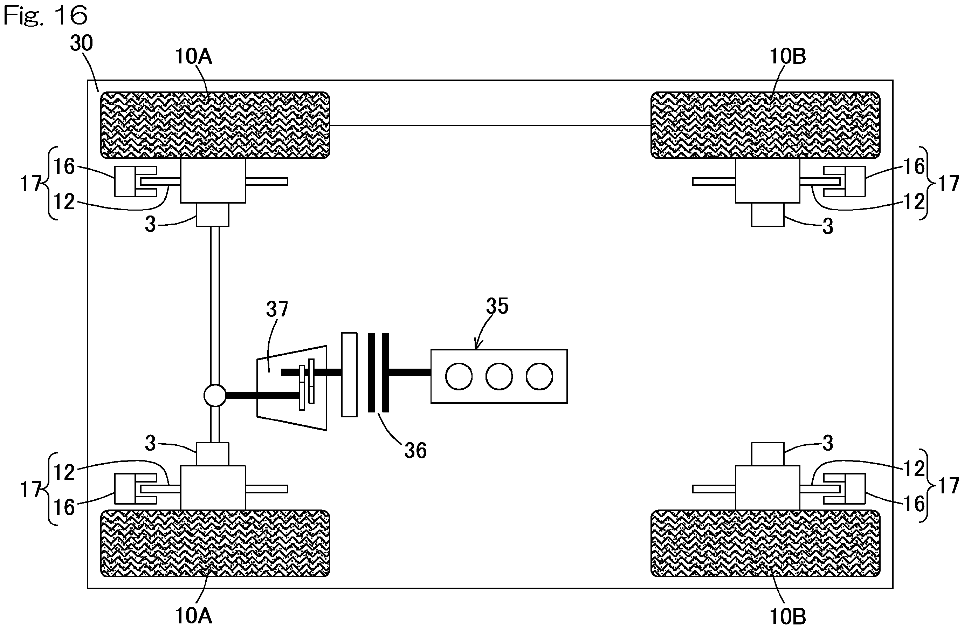

Fig. 16 shows an example in which vehicle power devices 1 according to any of the embodiments are applied to driving wheels 10_{A} as front wheels and driven wheels 10_{B} as rear wheels. The driving wheels 10_{A} are driven by a main drive source 35 including an internal combustion engine through a clutch 36 and a speed reduction gear 37. This front-wheel drive vehicle includes the vehicle power devices 1 for supporting and supplementarily driving the respective driving wheels 10_{A} and driven wheels 10_{B}. In such a way, the vehicle power devices 1 may be applied not only to the driven wheels 10_{B} but also to the driving wheels 10_{A}.

The vehicular system as shown in Fig. 14 may be a system that has a function of generating power but does not perform rotational drive when supplied with power. This vehicular system employs a vehicle bearing with a power generator device including a motor generator 3 that does not serve as a motor and a wheel bearing 2. The vehicle bearing with the power generator device has the same configuration as that of the vehicle power device according to any of the embodiments, except for the motor generator 3 that serves as a motor.

According to the vehicular system including the vehicle bearing with the power generator, regenerative power generated by the motor generator 3 can be stored in the intermediate voltage battery 49, so that a braking force can be generated. Appropriate use of such a system in combination with or alternative to the mechanical brake operation unit 57 makes it possible to improve braking performance. Thus, when limited to the function of generating power, each individual control unit 39 may be in the form of an AC/DC converter device (not illustrated), instead of an inverter device. The AC/DC converter device has a function of converting three-phase alternating current voltage to direct current voltage so as to charge the intermediate voltage battery 49 with the regenerative power from the motor generator 3 and can be controlled more easily than an inverter, so that the AC/DC converter device can have a more compact configuration.

Although the present invention has been described in terms of the preferred embodiments thereof with reference to the drawings, various additions, modifications, or deletions may be made without departing from the scope of the invention. Accordingly, such variants are included within the scope of the present invention.

**[Reference Numerals]**

| | |
|---|---|
| 1 vehicle power device | 2 wheel bearing |
| 3 driving motor having a power generation function (electric motor) | |
| 4 outer ring | |
| 5 inner ring | |
| 5 inner ring main body | |
| 5b partial inner ring | |
| 5i inboard side protrusion | |
| 6 rolling element | |
| 7 wheel bearing flange | |
| 8 knuckle (chassis frame component) | |
| 11 male thread portion | |
| 18 stator | |
| 19 rotor | |
| 24 bracket | |
| 24a bracket base portion | |
| 24b bracket cylindrical portion | |
| 25,58 nut | |
| 27 rotation detecting sensor | |
| 27a rotation detecting sensor rotor | |
| 27b rotation detecting sensor stator | |
| 27c output cable | |
| 61 flange part | |
| 62 bolt | |
| Hs heat radiation means | |
| Rb cylindrical member | |
| Sm spline | |

## Claims

1. A vehicle power device comprising:
a wheel bearing including an inner ring as a fixed ring and an outer ring as a rotary ring rotatably supported by the inner ring through rolling elements, the outer ring including a wheel mounting flange configured to be attached with a wheel of a vehicle on an outboard side end portion; and
an electric motor that can rotationally drive the rotary ring, and
the vehicle power device further comprising:
a bracket attached to a chassis frame component of the vehicle, the bracket including a bracket base portion and a bracket cylindrical portion, the bracket base portion interposed between the chassis frame component and the inner ring wherein the inner ring is removably fixed, the bracket cylindrical portion extending from the bracket base portion toward an outboard side,
wherein the electric motor includes a stator removably attached to an inner periphery of the bracket cylindrical portion and a rotor attached to the outer ring on an inner periphery of the stator.

2. The vehicle power device as claimed in claim 1, wherein the wheel bearing is removable from the bracket base portion in a bearing axial direction in a state where the bracket is attached to the chassis frame component and the stator is disposed on the bracket cylindrical portion.

3. The vehicle power device as claimed in claim 1 or 2, wherein the inner ring includes an inner ring main body and a partial inner ring fitted to an outer peripheral surface of the inner ring main body on an inboard side; the inner ring main body includes an inboard side protrusion that protrudes toward an inboard side and has a male thread portion formed at a tip end part of the inboard side protrusion; the bracket base portion is formed with a through-hole through which the inboard side protrusion can be inserted; and a nut is screwed into the male thread portion of the inboard side protrusion in a state where the inboard side protrusion is inserted into the through-hole of the bracket base portion and an inboard side end surface of the partial inner ring is abutted to an outboard side surface of the bracket base portion.

4. The vehicle power device as claimed in claim 1 or 2, wherein the inner ring includes the inner ring main body and the partial inner ring fixed to the outer peripheral surface of the inner ring main body on an outboard side by fastening or staking with a nut; the inner ring main body includes the inboard side protrusion that protrudes toward the inboard side and has the male thread portion formed at the tip end part of the inboard side protrusion; the bracket base portion is formed with the through-hole through which the inboard side protrusion can be inserted; and the nut is screwed into the male thread portion of the inboard side protrusion in a state where the inboard side protrusion is inserted into the through-hole of the bracket base portion and an inboard side end surface of the inner ring main body is abutted to the outboard side surface of the bracket base portion.

5. The vehicle power device as claimed in claim 1 or 2, wherein the inner ring includes the inner ring main body and the partial inner ring fixed to the outer peripheral surface of the inner ring main body on the outboard side by fastening or staking with a nut; the inner ring includes a flange part in which a screw hole is formed on an inboard side end of the inner ring main body; and the flange part is removably fixed to the bracket base portion with a bolt from an inboard side.

6. The vehicle power device as claimed in claim 3 or 4, wherein a spline that prevents relative rotation with respect to the bracket base portion is disposed on the inboard side protrusion inserted into the through-hole of the bracket base portion.

7. The vehicle power device as claimed in any one of claims 1 to 6, wherein the wheel bearing includes a rotation detecting sensor configured to detect the rotation speed of the outer ring with respect to the inner ring; the rotation detecting sensor includes a rotation detecting sensor rotor disposed on an outboard side end portion of the outer ring and a rotation detecting sensor stator disposed on an outboard side end portion of the inner ring that detects the rotation detecting sensor rotor; and an external extraction member that leads out an output cable of the rotation detecting sensor to the outside is provided.

8. The vehicle power device as claimed in claim 7, wherein the rotation detecting sensor also serves as a wheel speed sensor.

9. The vehicle power device as claimed in any one of claims 1 to 8, wherein a cylindrical member made of a non-magnetic material is disposed between an inner peripheral surface of the rotor and an outer peripheral surface of the outer ring.

10. The vehicle power device as claimed in any one of claims 1 to 9, wherein a heat radiation means that radiates heat generated in the electric motor to external space is disposed on an outer periphery of the bracket cylindrical portion.

11. A vehicle bearing with a power generator comprising:
a wheel bearing including an inner ring as a fixed ring and an outer ring as a rotary ring rotatably supported by the inner ring through rolling elements, the outer ring including a wheel mounting flange configured to be attached with a wheel of a vehicle on an outboard side end portion; and
a generator that generates electricity by rotation of the rotary ring, and
the vehicle bearing with the power generator further comprising:
a bracket attached to a chassis frame component of the vehicle, the bracket including a bracket base portion and a bracket cylindrical portion, the bracket base portion interposed between the chassis frame component and the inner ring wherein the inner ring is removably fixed, the bracket cylindrical portion extending from the bracket base portion toward an outboard side,
wherein the generator includes a stator removably attached to an inner periphery of the bracket cylindrical portion and a rotor attached to the outer ring on an inner periphery of the stator.
